(19)

Europäisches
Patentamt
European
Patent Office
Office européen
des brevets

(11) **EP 2 711 646 B1**

(12) **EUROPEAN PATENT SPECIFICATION**

(45) Date of publication and mention
of the grant of the patent:
**11.09.2019 Bulletin 2019/37**

(51) Int Cl.:
*F24F 11/00* (2018.01)          *G05B 19/00* (2006.01)
*H02P 23/14* (2006.01)         *H02P 23/12* (2006.01)
*H02P 6/00* (2016.01)          *H02P 6/20* (2016.01)

(21) Application number: **12198700.2**

(22) Date of filing: **20.12.2012**

(54) **Method and apparatus for controlling permanent magnet synchronous motor of an air conditioning device**

Verfahren und Vorrichtung zur Steuerung eines Permanentmagnet-Synchronmotors einer Klimaanlagenvorrichtung

Procédé et appareil pour réguler un moteur synchrone à aimant permanent d'un dispositif de climatisation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2012 CN 201210357984**

(43) Date of publication of application:
**26.03.2014 Bulletin 2014/13**

(73) Proprietor: **Hisense (Shandong) Air-conditioning Co., Ltd.**
**266100 Qingdao Shandong (CN)**

(72) Inventors:
• **Zhang, Yongliang**
  **266071 Qingdao (CN)**
• **Wang, Zhigang**
  **266071 Qingdao (CN)**

• **Zhao, Keke**
  **266071 Qingdao (CN)**
• **Yin, Xianxin**
  **266071 Qingdao (CN)**
• **Wang, Weijie**
  **266071 Qingdao (CN)**
• **Liu, Yong**
  **266071 Qingdao (CN)**

(74) Representative: **Botti, Mario et al**
**Botti & Ferrari S.r.l.**
**Via Cappellini, 11**
**20124 Milano (IT)**

(56) References cited:
**US-A1- 2007 085 508     US-A1- 2010 072 929**
**US-B1- 6 396 229**

## Description

### Technical Field

The present invention relates to air conditioning technologies, and in particular to an air conditioning device and a method and apparatus for controlling a permanent magnet synchronous motor thereof.

### Background Art

At present, the DC inverted frequency air conditioning device is widely applied. Most of the compressors of the DC inverted frequency air conditioners adopt a permanent magnet synchronous motor, and at present, the sensor-less vector control technology is generally used to perform a drive control of this motor in the industry.

In the sensor-less vector control method, compressor motor parameters (e.g., a motor stator resistance value, a permanent magnetic flux, etc.) are generally adopted to control the operation of the current permanent magnet synchronous motor.

However, the inventor of the invention finds that the motor parameters adopted in the current sensor-less vector control method are generally obtained offline. In the actual operating process of the permanent magnet synchronous motor, due to the influences of conditions such as the current or the ambient temperature, the actual motor parameter values during the operation of the permanent magnet synchronous motor may be changed, and the difference between the motor parameters obtained offline and the changed parameters is larger under conditions of an extreme temperature change and a low frequency operation. In case that the difference is comparatively large, if the motor parameters obtained offline are still used to control the operation of the permanent magnet synchronous motor, the error of the position estimation of the permanent magnet synchronous motor will be rendered too large to cause the motor operation energy efficiency of the air conditioning device to be reduced and the noise to get large. If the working condition is too bad, the motor of the air conditioning device may be stopped abnormally.

US2007085508 discloses a method of estimating a magnetic pole position in a synchronous motor from an instructed voltage applied to the motor, a current generated from the instructed voltage and parameters. To estimate the position substantially matching with a true magnetic pole position, a phase matching voltage having a phase matching with the estimated magnetic pole position previously obtained is applied to the motor. The phase matching voltage has a harmonic frequency higher than that of the instructed voltage. A phase matching current generated from the phase matching voltage is detected from the motor. A value of at least one of the parameters is corrected such that a difference in phase between the phase matching voltage and the phase matching current substantially becomes zero. An estimated magnetic pole position is calculated from the instructed voltage, the generated current and the parameter having the corrected value.

US2007085508 discloses the following features of independent claim 1:

A device, comprising: a parameter storage module storing initial motor parameters written in beforehand; a main control module acquiring the initial motor parameters from the parameter storage module; and transmitting a motor operation instruction and the initial motor parameters during controlling the operation of the device; a permanent magnet synchronous motor control means controlling a permanent magnet synchronous motor to start operating based on the initial motor parameters transmitted by the main control module after receiving the motor operation instruction transmitted by the main control module; and after the start of operation of the permanent magnet synchronous motor, estimating a rotor position angle error of the permanent magnet synchronous motor based on a sampled current and a sampled rotation speed of the permanent magnet synchronous motor; estimating current motor parameters of the permanent magnet synchronous motor based on the estimated rotor position angle error; and controlling the continuing operation of the permanent magnet synchronous motor based on the estimated current motor parameters.

### Summary of the Invention

The embodiments of the invention provide an air conditioning device and a method for controlling a permanent magnet synchronous motor thereof for improving the motor operation energy efficiency of the air conditioning device and reducing the noise of the motor operation.

According to one aspect of the invention, an air conditioning device is as defined in independent claim 1.

Wherein, the permanent magnet synchronous motor control means comprises: a motor information collection module for sampling and collecting the current and rotation speed of the permanent magnet synchronous motor after the start of operation of the permanent magnet synchronous motor; a motor control module for controlling the permanent magnet synchronous motor to start operating based on the initial motor parameters after receiving the motor operation instruction; and after the start of operation of the permanent magnet synchronous motor, estimating the rotor position angle error of the permanent magnet synchronous motor based on the current and rotation speed of the permanent magnet synchronous motor sampled and collected by the motor information collection module; estimating the current motor parameters of the permanent magnet synchronous motor based on the estimated rotor position angle error; and controlling the continuing operation of the permanent magnet synchronous motor based on the estimated current motor parameters.

Wherein the motor control module comprises a motor control unit for controlling the permanent magnet synchronous motor to start operating based on the initial motor parameters of the permanent magnet synchronous motor; a rotor position angle error estimation unit for estimating the rotor position angle error of the permanent magnet synchronous motor based on the current and rotation speed sampled and collected by the motor information collection module; and transmitting the estimated rotor position angle error; a current motor parameter estimation unit for receiving the rotor position angle error estimated by the rotor position error estimation unit and estimating the current motor parameters of the permanent magnet synchronous motor based on the rotor position angle error estimated by the rotor position angle estimation unit; and transmitting the estimated current motor parameters to the motor control unit; the motor control unit controlling the operation of the permanent magnet synchronous motor based on the estimated current motor parameters after receiving the current motor parameters estimated by the current motor parameter estimation unit. Wherein, the rotor position angle error estimation unit is used for, each time a set period is reached, estimating the rotor position angle error of the permanent magnet synchronous motor based on the current and rotation speed sampled and collected by the motor information collection module; and transmitting the estimated rotor position angle error.

Wherein, the current motor parameter estimation unit estimating the current motor parameters of the permanent magnet synchronous motor based on the rotor position angle error estimated by the rotor position angle error estimation unit is specifically as follows:

the current motor parameter estimation unit judging the value of $\hat{\theta}_e$:

if $\hat{\theta}_e$ is less than a set lower limit, $R_{i+1} = R_i + \Delta R$, and $\phi_m^{i+1} = \phi_m^i + \Delta \phi_m$;

if $\hat{\theta}_e$ is less than or equal to a set upper limit, and is larger than or equal to the set lower limit, $R_{i+1} = R_i$, and $\phi_m^{i+1} = \phi_m^i$;
the current motor parameter estimation unit using $R_{i+1}$ as the current motor stator resistance estimated value $\hat{R}$,

and using $\phi_m^{i+1}$ as the current motor magnetic flux estimated value $\hat{\phi}_m$,

wherein $R_{i+1}$ is the motor stator resistance value estimated at the $(i+1)^{th}$ time, $\phi_m^{i+1}$ is the motor magnetic flux value estimated at the $(i+1)^{th}$ time, $R_i$ is the motor stator resistance value estimated at the $i^{th}$ time, $\phi_m^i$ is the motor magnetic flux value estimated at the $i^{th}$ time, $\Delta R$ is a resistance adjusted value set beforehand, and $\Delta \phi_m$ is a magnetic flux adjusted value set beforehand.

According to another aspect of the invention, a method is defined in independent claim 6.
Wherein, the estimating the rotor position angle error $\hat{\theta}_e$ of the permanent magnet synchronous motor based on the vector current $i_{\gamma\delta}$ and the rotation angular speed $\omega$ includes:
determining $\hat{\theta}_e$ based on the following Formula 1:

$$\hat{\theta}_e \approx -p \left\{ \frac{(R_i - R_0)i_\gamma - (\phi_m^i - \phi_m^0) + \omega\phi_m^0}{\phi_m^0} \right\} \Bigg/ \left( K_{p\theta} + \frac{K_{I\theta}}{p} \right) \qquad \text{(Formula 1)}$$

wherein in the Formula 1, $i$ is the times of estimation; $R_i$ is the motor stator resistance value estimated at the $i^{th}$ time,

when $i$=0, $R_i$ is the initial motor stator resistance value $R_0$; $\phi_m^i$ is the motor magnetic flux value estimated at the $i^{th}$

time, when $i$=0, $\phi_m^i$ is the initial motor stator magnetic flux value $\phi_m^0$; $i_\gamma$ is a real current component of $i_{\gamma\delta}$; $p$ is a differential factor; $K_{p\theta}$ and $K_{I\theta}$ are set parameters; and
the estimating current motor parameters of the permanent magnet synchronous motor based on the estimated rotor position angle error includes:

if $\hat{\theta}_e$ is larger than a set upper limit, the motor stator resistance value estimated at the $(i+1)^{th}$ time $R_{i+1} = R_i - \Delta R$, and the motor magnetic flux value estimated at the $(i+1)^{th}$ time $\phi_m^{i+1} = \phi_m^i - \Delta \phi_m$; wherein $\Delta R$ is a resistance adjusted value set beforehand, and $\Delta\phi_m$ is a magnetic flux adjusted value set beforehand;

if $\hat{\theta}_e$ is less than a set lower limit, $R_{i+1} = R_i + \Delta R$, and $\phi_m^{i+1} = \phi_m^i + \Delta\phi_m$ ;

if $\hat{\theta}_e$ is less than or equal to the set upper limit, and is larger than or equal to the set lower limit, $R_{i+1} = R_i$, and

$$\phi_m^{i+1} = \phi_m^i ;$$

using $R_{i+1}$ as the current motor stator resistance estimated value $\hat{R}$, and using $\phi_m^{i+1}$ as the current motor magnetic flux estimated value $\hat{\phi}_m$.

Wherein, the $\Delta R$ is set based on the following Formula 2:

$$\Delta R = dR \times T_s \qquad\qquad\qquad (\text{Formula  2})$$

the $\Delta\phi_m$ is set based on the following Formula 3:

$$\Delta\phi_m = d\phi_m \times T_s \qquad\qquad\qquad (\text{Formula  3})$$

wherein $T_s$ is the set period, and $dR$ and $d\phi_m$ are set parameters.

Wherein, the estimating a rotor position angle error of the permanent magnet synchronous motor based on a sampled and collected current and rotation speed of the permanent magnet synchronous motor; and estimating current motor parameters of the permanent magnet synchronous motor based on the estimated rotor position angle error are specifically as follows:

estimating the rotor position angle error of the permanent magnet synchronous motor based on the sampled and collected current and rotation speed of the permanent magnet synchronous motor, and estimating the current motor parameters of the permanent magnet synchronous motor based on the estimated rotor position angle error each time the set period is reached.

In the technical solutions of the embodiments of the invention, the air conditioning device, in the process of controlling the operation of the permanent magnet synchronous motor of the compressor, estimates the rotor position angle error based on the feedback information of the current and rotation speed of the permanent magnet synchronous motor. Furthermore, the less the rotor position angle error of the motor is, the higher the energy efficiency of the permanent magnet synchronous motor is, and the less the noise of the rotor is. Therefore, it can be determined whether the current motor parameters used for controlling the operation of the permanent magnet synchronous motor are proper based on the estimated rotor position angle error. If the motor parameters are not proper, the motor parameters are properly adjusted. That is, the operation of the permanent magnet synchronous motor is controlled using the estimated current motor parameters to achieve the object of reducing the rotor position angle error, and thus improve the motor operation energy efficiency of the air conditioning device and reduce the noise of the motor operation.

**Brief Description of the Drawings**

Fig. 1 is a block diagram of the internal structure of the air conditioning device of an embodiment of the present invention;
Fig. 2 is a flow chart of the method for controlling the permanent magnet synchronous motor of an embodiment of the invention;
Fig. 3 is a flow chart of the method for estimating the motor parameters and controlling the operation of the permanent magnet synchronous motor based on the estimated motor parameters of an embodiment of the invention;
Fig. 4 is a schematic diagram of the observer model of an embodiment of the invention;
Fig. 5 is a block diagram of the internal structure of the apparatus for controlling the permanent magnet synchronous motor of an embodiment of the invention.

**Detailed Description**

The inventor of the invention, based on the analysis of the reasons why the motor energy efficiency is reduced and the noise gets large in the above air conditioning device, considers that in the operating process of the permanent magnet synchronous motor of the air conditioning device, the rotor position error of the permanent magnet synchronous motor can be estimated, the motor parameters of the permanent magnet synchronous motor in the actual operating process thus can be estimated based on the estimated rotor position error, and the operation of the permanent magnet synchronous motor is correspondingly controlled based on the estimated motor parameters which better accord with the actual operating status to thereby improve the motor operation energy efficiency of the air conditioning device and reduce the noise of the motor operation.

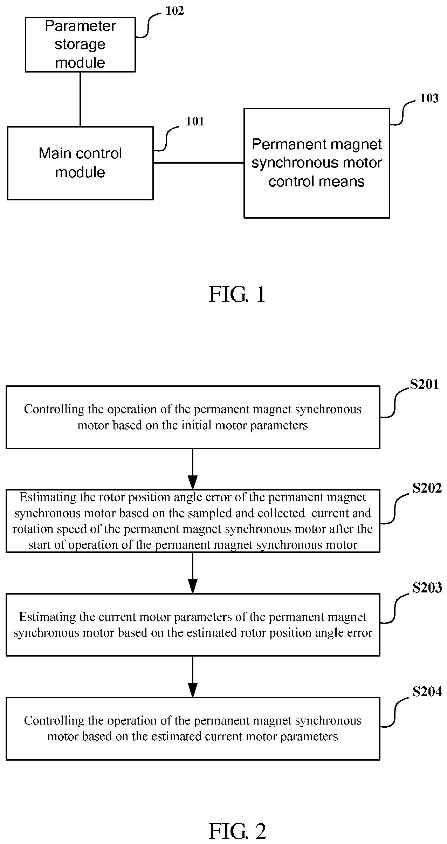

The specific technical solutions of the embodiments of the invention are described in detail below by referring to the accompanying figures. The internal structure of the air conditioning device provided by the embodiment of the invention, as shown in Fig. 1, comprises a main control module 101, a parameter storage module 102, and a permanent magnet synchronous motor control means 103.

Wherein the main control module 101 can be specifically made of a CPU (Central Processing Unit), a DSP (Digital Signal Processor), an FPGA (Field Programmable Gate Array), a single-chip microcomputer, a microcontroller, etc. For example, the main control module 101 includes an NEC (Nippon Electric Company) chip upd0524A.

The main control module 101 is used to receive a user instruction and control the operations of the respective components in the air conditioning device based on the user instruction to thereby realize the various functions of the air conditioning device, e.g., refrigeration function, heating function, etc.

The parameter storage module 102 is used for storing initial motor parameters written in advance. Specifically, the parameter storage module 102 may be nonvolatile storage devices, e.g., an EEPROM (Electrically Erasable Programmable Read-Only Memory), a FLASH, etc. The initial motor parameters are written in the parameter storage module 102 beforehand as fixed parameter values.

The main control module 101 may control the operation or stop of the permanent magnet synchronous motor of the compressor by means of the permanent magnet synchronous motor control means 103 in the process of achieving the various functions of the air conditioning device, i.e., the main control module 101 sends a motor operation instruction and the initial motor parameters to the permanent magnet synchronous motor control means 103 in the process of controlling the operation of the air conditioning device after acquiring the initial motor parameters from the parameter storage module 102, and the permanent magnet synchronous motor control means 103 controls the permanent magnet synchronous motor of the compressor to operate after receiving the motor operation instruction sent by the main control module 101. If the main control module 101 transmits a motor stop instruction to the permanent magnet synchronous motor control means 103, the permanent magnet synchronous motor control means 103 controls the permanent magnet synchronous motor of the compressor to stop operating after receiving the motor stop instruction transmitted by the main control module 101.

The main control module 101 and the parameter storage module 102 may communicate with each other via a parallel or serial bus, e.g., an IIC (Inter-Integrated Circuit) bus, and the main control module 101 and the permanent magnet synchronous motor control means 103 may communicate with each other by a parallel or serial bus, e.g., an SCI (Serial Communication Interface) bus.

The flow chart of the method for controlling the motor by the permanent magnet synchronous motor control means 103, as shown in Fig. 2, comprises the following steps:

S201: controlling the operation of the permanent magnet synchronous motor based on the initial motor parameters.

The permanent magnet synchronous motor control means 103 controls the permanent magnet synchronous motor to start operating based on the initial motor parameters transmitted by the control module 101 after receiving the motor operation instruction sent by the main control module 101.

S202: estimating the rotor position angle error of the permanent magnet synchronous motor based on the sampled current and rotation speed of the permanent magnet synchronous motor after the start of operation of the permanent magnet synchronous motor.

To be specific, the permanent magnet synchronous motor control means 103, after controlling the permanent magnet synchronous motor to start operating, samples the current and rotation speed of the permanent magnet synchronous motor, and estimates the rotor position angle error of the permanent magnet synchronous motor based on the sampled current and rotation speed of the permanent magnet synchronous motor.

S203: estimating the current motor parameters of the permanent magnet synchronous motor based on the estimated rotor position angle error.

Since the error of the motor stator resistance and the error of the motor magnetic flux in the motor parameters heavily impact on the control of the operation of the permanent magnet synchronous motor, the estimation of the current motor parameters mainly includes the estimation of the current motor stator resistance value and the current motor magnetic flux value, i.e., the estimated current motor parameters include a current motor stator resistance estimated

value $\hat{R}$ and a current motor magnetic flux estimated value $\hat{\phi}_m$.

After estimating by the permanent magnet synchronous motor control means 103 the rotor position angle error of the permanent magnet synchronous motor, the current motor parameters of the permanent magnet synchronous motor estimated based on the estimated rotor position angle error include a current motor stator resistance estimated value $\hat{R}$ and a current motor magnetic flux estimated value $\hat{\phi}_m$.

S204: controlling the operation of the permanent magnet synchronous motor based on the estimated current motor parameters.

Particularly, the permanent magnet synchronous motor control means 103 replaces the initial motor parameters with the estimated current motor parameters, i.e., replacing the initial motor stator resistance value $R_0$ with the estimated value $\hat{R}$ and replacing the initial motor magnetic flux value $\phi_m^0$ with the estimated value $\hat{\phi}_m$, so as to control the operation of the permanent magnet synchronous motor using the estimated current motor parameters. That is, calculating a vector voltage based on the estimated current motor parameters, then converting the vector voltage to three-phase voltages, and applying the calculated three-phase voltages to the three-phase motor of the permanent magnet synchronous motor respectively to control the operation of the permanent magnet synchronous motor. The method for controlling the operation of the permanent magnet synchronous motor using the estimated current motor parameters is same as the method for controlling the operation of the permanent magnet synchronous motor using the fixed motor parameters in the prior art, and thus details are omitted herein.

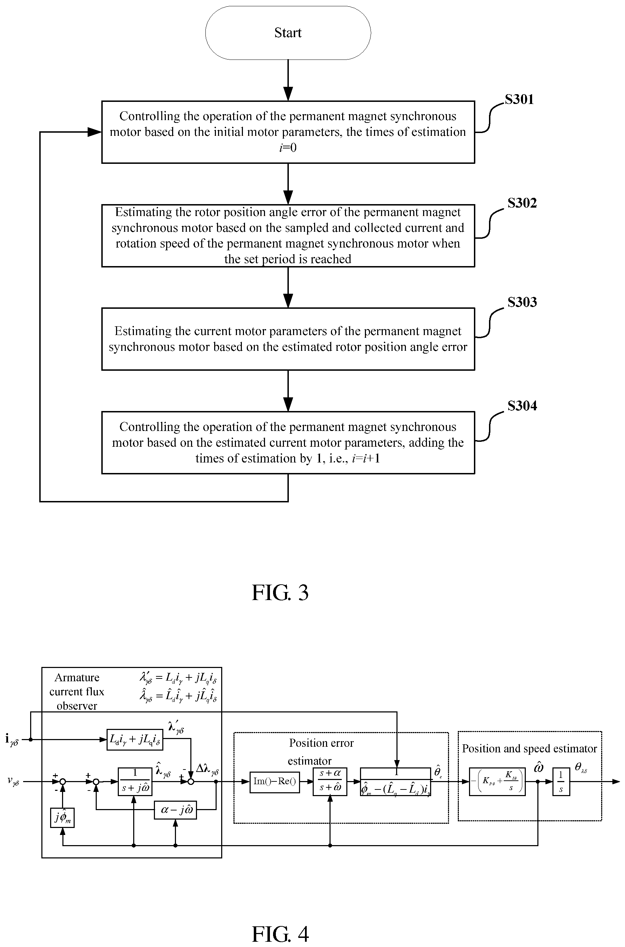

In the practical application, after the start of operation of the permanent magnet synchronous motor, the estimation of the current motor parameters by the permanent magnet synchronous motor control means 103 can be done periodically. That is to say, each time an adjustment period Ts is reached, the estimation of the motor parameters is performed based on the above method in steps S202-S203. Then, the operation of the permanent magnet synchronous motor is controlled using the estimated motor parameters, as the specific flow chart shown in Fig. 3.

S301: controlling the operation of the permanent magnet synchronous motor based on the initial motor parameters, the times of estimation $i=0$.

In particular, the initial motor parameters acquired by the permanent magnet synchronous motor control means 103 from the main control module 101 may include an initial motor stator resistance value $R_0$ and an initial motor magnetic flux value $\phi_m^0$.

The permanent magnet synchronous motor control means 103 calculates the vector voltage $v_{\gamma\delta}$ of the motor based on the initial motor parameters and the desired rotation speed of the motor to control the operation of the permanent magnet synchronous motor. Generally speaking, after converting the calculated vector voltage $v_{\gamma\delta}$ to three-phase voltages, the three-phase voltages are applied to the three-phase motors of the compressor respectively to control the operation of the permanent magnet synchronous motor. Since the calculation of the vector voltage $v_{\gamma\delta}$ based on the initial motor parameters and the desired rotation speed of the motor and the method for controlling the operation of the permanent magnet synchronous motor based on the vector voltage are the same as those in the prior art and is well known to those skilled in the art, details are omitted for clarity herein.

S302: estimating the rotor position angle error of the permanent magnet synchronous motor based on the sampled current and rotation speed of the permanent magnet synchronous motor when the set period $T_s$ is reached.

To be specific, the permanent magnet synchronous motor control means 103 estimates the rotor position angle error of the permanent magnet synchronous motor based on the sampled current and rotation speed of the permanent magnet synchronous motor each time the set period $T_s$ set by the timer is reached.

The method for sampling the current and rotation speed of the permanent magnet synchronous motor is well known to those skilled in the art and thus details are not further introduced herein. The rotor position angle error of the permanent magnet synchronous motor may be estimated based on the sampled current and rotation speed of the permanent magnet synchronous motor. Particularly, the vector current $i_{\gamma\delta}$ of the permanent magnet synchronous motor and the rotation angular speed $\omega$ of the permanent magnet synchronous motor may be determined by the sampled current and rotation speed of the permanent magnet synchronous motor. Since the method for determining $i_{\gamma\delta}$ and $\omega$ by the sampled current and rotation speed of the permanent magnet synchronous motor is well known to those skilled in the art, no details are further given herein.

Wherein the vector current $i_{\gamma\delta}$ includes a current component $i_\gamma$ of an axis $\gamma$ and a current component $i_\delta$ of an axis $\delta$, i.e., $i_{\gamma\delta} = i_\gamma + ji_\delta$. The rotor position angle error $\hat{\theta}_e$ of the permanent magnet synchronous motor can be estimated based on $i_{\gamma\delta}$ and $\omega$. For example, $\hat{\theta}_e$ can be estimated based on Formula 1:

$$\hat{\theta}_e \approx -p \left\{ \frac{(R_i - R_0)i_\gamma - (\phi_m^i - \phi_m^0) + \omega\phi_m^0}{\phi_m^0} \right\} \Big/ (K_{p\theta} + \frac{K_{I\theta}}{p}) \qquad \text{(Formula 1)}$$

in the Formula 1, $R_i$ is the motor stator resistance value estimated at the $i^{th}$ time; when $i=0$, $R_i$ is the initial motor stator resistance value $R_0$; $\phi_m^i$ is the motor magnetic flux value estimated at the $i^{th}$ time; when $i=0$, $\phi_m^i$ is the initial motor magnetic flux value $\phi_m^0$; $i_\gamma$ is a real current component of $i_{\gamma\delta}$; $p$ is a differential factor, i.e., $p = d/dt$; $K_{p\theta}$ and $K_{I\theta}$ are set parameters. For example, $K_{p\theta}$ can be set to 0.15, and $K_{I\theta}$ can be set to 0.009.

In fact, the above estimation formula, i.e., Formula 1, is a method for estimating $\hat{\theta}_e$ by omitting the impact of the imaginary current component $i_\delta$ of $i_{\gamma\delta}$ on $\hat{\theta}_e$ so as to simplify the calculation. Those skilled in the art can estimate $\hat{\theta}_e$ with other formulae based on the contents disclosed by the invention. Then, in case of not departing from the basic principle of estimating the rotor position angle error $\hat{\theta}_e$ of the permanent magnet synchronous motor based on the current and rotation speed of the permanent magnet synchronous motor as in the invention, all other estimating methods should also be considered to be within the scope of protection of the invention.

S303: estimating the current motor parameters of the permanent magnet synchronous motor based on the estimated rotor position angle error.

Specifically, the permanent magnet synchronous motor control means 103 estimates the current motor parameters of the permanent magnet synchronous motor based on the estimated rotor position angle error $\hat{\theta}_e$ as follows:

if $\hat{\theta}_e$ is larger than a set upper limit, the motor stator resistance value estimated at the $(i+1)^{th}$ time $R_{i+1} = R_i - \Delta R$, and the motor magnetic flux value estimated at the $(i+1)^{th}$ time $\phi_m^{i+1} = \phi_m^i - \Delta\phi_m$; wherein $\Delta R$ is a resistance adjusted value set beforehand, and $\Delta\phi_m$ is a magnetic flux adjusted value set beforehand;

if $\hat{\theta}_e$ is less than a set lower limit, $R_{i+1} = R_i + \Delta R$, and $\phi_m^{i+1} = \phi_m^i + \Delta\phi_m$;

if $\hat{\theta}_e$ is less than or equal to the set upper limit, and is larger than or equal to the set lower limit, $R_{i+1} = R_i$, and $\phi_m^{i+1} = \phi_m^i$;

using $R_{i+1}$ as the current motor stator resistance estimated value $\hat{R}$, and using $\phi_m^{i+1}$ as the current motor magnetic flux estimated value $\hat{\phi}_m$.

Those skilled in the art can set the above upper limit and lower limit according to actual conditions, e.g., the upper limit can be set to 0.02 and the lower limit can be set to -0.02.

The above $\Delta R$ and $\Delta\phi_m$ can be set based on the following Formulae 2 and 3:

$$\Delta R = dR \times T_s \qquad \text{(Formula 2)}$$

$$\Delta\phi_m = d\phi_m \times T_s \qquad \text{(Formula 3)}$$

wherein $dR$ and $d\phi_m$ are set parameters, which are set by those skilled in the art according to the actual conditions, e.g., it can set $dR = 0.01\Omega/sec$, and $d\phi_m = 0.001Wb/sec$.

S304: controlling the operation of the permanent magnet synchronous motor based on the estimated current motor parameters, adding the times of estimation by 1, i.e., $i = i+1$, and then turning to the step S302.

To be specific, the permanent magnet synchronous motor control means 103 controls the continuing operation of the permanent magnet synchronous motor based on the current motor stator resistance estimated value $\hat{R}$ and the current motor magnetic flux estimated value $\hat{\phi}_m$, i.e., the vector voltage of the motor is calculated based on the estimated current motor parameters and the desired rotation speed of the motor, and then the operation of the permanent magnet synchronous motor is controlled based on the calculated vector voltage. The method for calculating the vector voltage of the motor based on the estimated current motor parameters and the desired rotation speed of the motor can be the same as the method for calculating the vector voltage of the motor based on the initial motor parameters and the desired rotation speed of the motor in the prior art, i.e., the vector voltage is calculated by replacing the initial motor parameters with the estimated current motor parameters, and thus details are omitted herein.

The above estimation formula, i.e., Formula 1, can be deduced by referring to the observer model as shown in Fig. 4. It can be seen from the observer model shown in Fig. 4 that the deducing of the vector voltage $v_{\gamma\delta}$ of the permanent magnet synchronous motor is as follows:

$$v_{\gamma\delta} = \hat{R}i_{\gamma\delta} + (p + j\hat{\omega})\hat{\lambda}_{\gamma\delta} + j\hat{\omega}\hat{\phi}_m + (\alpha - j\hat{\omega})\Delta\lambda_{\gamma\delta} \qquad \text{(Formula 4)}$$

wherein,

$$\Delta\lambda_{\gamma\delta} = \hat{\lambda}_{\gamma\delta} - (L_d i_{\gamma} + jL_q i_{\delta}) \qquad \text{(Formula 5)}$$

$$\hat{\lambda}_{\gamma\delta} = \hat{L}_d\hat{i}_{\gamma} + j\hat{L}_q\hat{i}_{\delta} \qquad \text{(Formula 6)}$$

$$\lambda_{\gamma\sigma} = (L_d i_{\gamma} + jL_q i_{\delta}) + \frac{L_q - L_d}{2}(i_{\gamma} - ji_{\delta})(1 - e^{-j2\theta_e}) \qquad \text{(Formula 7)}$$

the following formula can be deduced based on the above Formulae 4-7:

$$\Delta\lambda_{\gamma\delta} = \frac{p + j\hat{\omega}}{p + \alpha}\left\{\phi_m(1 - e^{-j\theta_e}) - \frac{L_q - L_d}{2}(i_{\gamma} - ji_{\delta})(1 - e^{-j2\theta_e})\right\} - \frac{j\hat{\omega}(\hat{\phi}_m - \phi_m) + (\hat{R} - R)i_{\gamma\delta}}{(p + \alpha)} \qquad \text{(Formula 8)}$$

the following formula can be further deduced based on the observer model shown in Fig. 4:

$$\hat{\theta}_e = -\frac{1}{\hat{\phi}_m}\frac{p + \alpha}{p + \hat{\omega}}\left\{\text{Im}(\Delta\lambda_{\gamma\delta}) - \hat{\omega}\text{Re}(\Delta\lambda_{\gamma\delta})\right\} \qquad \text{(Formula 9)}$$

since $\dfrac{L_q - L_d}{2}(i_{\gamma} - ji_{\delta})(1 - e^{-j2\theta_e})$ is much smaller than $\phi_m(1-e^{-j\theta_e})$, it can be neglected, and after it is neglected, the following formula can be deduced (the specific deducing process is omitted herein):

$$\hat{\theta}_e = -\frac{1}{\hat{\phi}_m}\frac{p + \alpha}{p + \hat{\omega}}\left\{\text{Im}(\Delta\lambda_{\gamma\delta}) - \hat{\omega}\text{Re}(\Delta\lambda_{\gamma\delta})\right\}$$

$$\approx \frac{\phi_m}{\hat{\phi}_m}\theta_e - \frac{\hat{\omega}(\hat{R} - R)i_{\gamma} - (\hat{R} - R)i_{\delta} - \hat{\omega}(\hat{\phi}_m - \phi_m)}{\hat{\phi}_m(p + \hat{\omega})} \qquad \text{(Formula 10)}$$

It can be seen from Fig. 10 that in order to make the rotor position angle errors $\hat{\theta}_e$ and $\hat{\theta}_e$ approach 0 to thereby improve the motor energy efficiency and reduce the noise of the motor operation, the stator resistance estimated value $\hat{R}$ and the motor magnetic flux estimated value $\hat{\phi}_m$ are required to be adjusted. Based on this principle, the above estimation formula of the Formula 1 can be obtained.

The meanings of the respective parameters or symbols in the above Formulae 4-10 are as follows:

$\alpha$ : the cut-off angular frequency of the observer;
$L_d$, $L_q$ : the inductances of the axis d and the axis q of the permanent magnet synchronous motor;
$\phi_m$ : the motor magnetic flux of the permanent magnet synchronous motor;
$p$ : the differential factor, $p = d/dt$;
$\omega$ : the synchronous angular speed frequency of the axis $\gamma\delta$ of the permanent magnet synchronous motor;
^: the symbol of the estimated value.

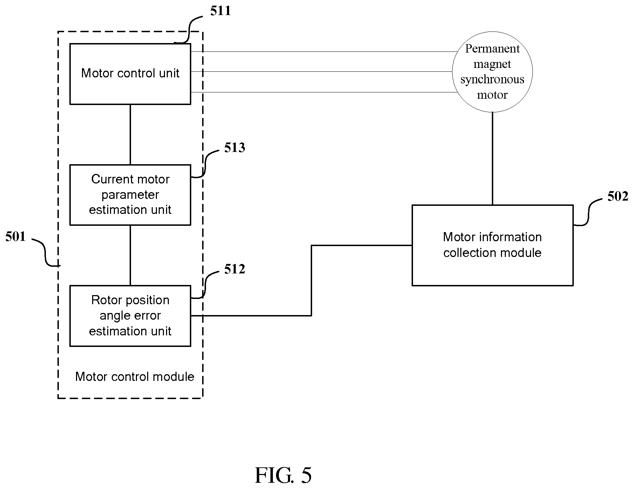

The block diagram of the structure of the permanent magnet synchronous motor control means 103 provided by the embodiment of the invention, as shown in Fig. 5, comprises: a motor control module 501 and a motor information collection module 502.

The motor control module 501 controls the permanent magnet synchronous motor to start operating based on the initial motor parameters transmitted by the main control module 101 after receiving the motor operation instruction transmitted by the main control module 101.

The motor information collection module 502 is used for sampling and collecting the information of the current and rotation speed of the permanent magnet synchronous motor during the operation of the permanent magnet synchronous motor.

The motor control module 501, during the operation of the permanent magnet synchronous motor, estimates the rotor position angle error of the permanent magnet synchronous motor based on the information of the current and rotation speed of the permanent magnet synchronous motor collected by the motor information collection module 502; estimates the current motor parameters of the permanent magnet synchronous motor based on the estimated rotor position angle error; and controls the continuing operation of the permanent magnet synchronous motor based on the estimated current motor parameters.

The motor control module 501 can specifically be a CPU, a DSP, an FPGA, a single-chip microcomputer, a microcontroller, etc., to implement its internal algorithm or logical function. For example, the motor control module 501 can use an NEC chip upd78f16F41.

The motor control module 501 specifically comprises a motor control unit 511, a rotor position angle error estimation unit 512, and a current motor parameter estimation unit 513.

The motor control unit 511 is used for controlling the permanent magnet synchronous motor to start operating based on the initial motor parameters transmitted by the main control module 101 after receiving the motor operation instruction transmitted by the main control module 101. The initial motor parameters specifically include an initial motor stator resistance value $R_0$ and an initial motor magnetic flux value $\phi_m^0$. Particularly, the motor control unit 511 calculates the vector voltage of the motor based on the initial motor parameters and the desired rotation speed of the motor, and controls the operation of the permanent magnet synchronous motor based on the calculated vector voltage.

The rotor position angle error estimation unit 512 is used for estimating the rotor position angle error of the permanent magnet synchronous motor based on the current and rotation speed sampled and collected by the motor information collection module 502; and transmitting the estimated rotor position angle error to the current motor parameter estimation unit 513.

To be specific, with respect to the set period $T_s$ of the timer, the rotor position angle error estimation unit 512 acquires the sampled and collected current and rotation speed from the motor information collection module 502 and estimates the rotor position angle error of the permanent magnet synchronous motor based on the acquired current and rotation speed, and then transmits the estimated rotor position angle error to the current motor parameter estimation unit 513 each time the set period $T_s$ of the timer is reached.

The method for estimating by the rotor position angle error estimation unit 512 the rotor position angel error of the permanent magnet synchronous motor based on the current and rotation speed of the permanent magnet synchronous motor is the same as the method in the above step S302, i.e., the vector current $i_{\gamma\delta}$ and the rotation angular speed $\omega$ of the permanent magnet synchronous motor can be determined based on the collected current and rotation speed of the permanent magnet synchronous motor; and the rotor position angle error $\hat{\theta}_e$ of the permanent magnet synchronous motor can be estimated based on $i_{\gamma\delta}$ and $\omega$. To be specific, the rotor position angle error $\hat{\theta}_e$ of the permanent magnet synchronous motor can be estimated based on the above Formula 1.

The current motor parameter estimation unit 513 is used for receiving the rotor position angle error estimated by the rotor position error estimation unit 512 and estimating the current motor parameters of the permanent magnet synchronous motor based on the rotor position angle error estimated by the rotor position angle estimation unit 512; and transmitting the estimated current motor parameters to the motor control unit 511.

The method for estimating the current motor parameters of the permanent magnet synchronous motor based on the estimated rotor position angle error $\hat{\theta}_e$ by the current motor parameter estimation unit 513 may the same as the method in the above step S303.

Particularly, the estimated current motor parameters of the permanent magnet synchronous motor including a current motor stator resistance estimated value $\hat{R}$ and a current motor magnetic flux estimated value $\hat{\phi}_m$;

the current motor parameter estimation unit 513 judging the value of $\hat{\theta}_e$:

if $\hat{\theta}_e$ is less than a set lower limit, $R_{i+1} = R_i + \Delta R$, and $\phi_m^{i+1} = \phi_m^i + \Delta\phi_m$;

if $\hat{\theta}_e$ is less than or equal to a set upper limit, and is larger than or equal to the set lower limit, $R_{i+1} = R_i$, and $\phi_m^{i+1} = \phi_m^i$;

the current motor parameter estimation unit 513 using $R_{i+1}$ as the current motor stator resistance estimated value

9

$\hat{R}$, and using $\overset{\wedge}{\phi_m^{i+1}}$ as the current motor magnetic flux estimated value $\overset{\wedge}{\phi}_m$.

$R_{i+1}$ is the motor stator resistance value estimated at the $(i+1)^{th}$ time, $\overset{\wedge}{\phi_m^{i+1}}$ is the motor magnetic flux value estimated at the $(i+1)^{th}$ time, $R_i$ is the motor stator resistance value estimated at the $i^{th}$ time, $\overset{\wedge}{\phi_m^{i}}$ is the motor magnetic flux value estimated at the $i^{th}$ time, $\Delta R$ is a resistance adjusted value set beforehand, and $\Delta \phi_m$ is a magnetic flux adjusted value set beforehand.

The motor control unit 511 controls the continuing operation of the permanent magnet synchronous motor based on the estimated current motor parameters after receiving the current motor parameters estimated by the current motor parameter estimation unit 513. To be specific, the motor control unit 511 calculates the vector voltage of the motor based on the current motor parameters estimated by the current motor parameter estimation unit 513 and the desired rotation speed of the motor, and controls the operation of the permanent magnet synchronous motor based on the calculated vector voltage.

In the technical solutions of the embodiments of the invention, the air conditioning device, in the process of controlling the operation of the permanent magnet synchronous motor of the compressor, estimates the rotor position angle error based on the feedback information of the current and rotation speed of the permanent magnet synchronous motor. Furthermore, the less the rotor position angle error of the motor is, the higher the energy efficiency of the permanent magnet synchronous motor is, and the less the noise of the rotor is. Therefore, it can be determined whether the current motor parameters used for controlling the operation of the permanent magnet synchronous motor are proper based on the estimated rotor position angle error. If the motor parameters are not proper, the motor parameters are properly adjusted. That is, the operation of the permanent magnet synchronous motor is controlled using the estimated current motor parameters to achieve the object of reducing the rotor position angle error, and thus improve the motor operation energy efficiency of the air conditioning device and reduce the noise of the motor operation. For example, when the rotor position angle error is too large, the stator resistance in the current motor parameters is adjusted to be smaller and the motor magnetic flux in the current motor parameters is adjusted to be smaller, and when the rotor position angle error is too small, the stator resistance in the current motor parameters is adjusted to be larger and the motor magnetic flux in the current motor parameters is adjusted to be larger.

In addition, the air conditioning device of the embodiment of the invention better facilitates the repair and the maintenance after the sale of the product. Wherein, the air conditioning device may be a series of air conditioning device products and may use compressors of different models, i.e., permanent magnet synchronous motors of different models.

With respect to the method for controlling the permanent magnet synchronous motor in the prior art, it is required to write initial motor parameters corresponding to the motor of the particular model into the parameter storage module of the air conditioning device with respect to the permanent magnet synchronous motors of different models. If the initial motor parameters written in the parameter storage module of an air conditioning device do not correspond to the motor installed in said air conditioning device, the motor may be caused to operate inefficiently or even be damaged. Besides, in case the parameter storage module in the air conditioning device is damaged, the maintenance personnel need to firstly ascertain the model of the motor installed in an air conditioning device, and then find a parameter storage module corresponding to the motor of this model to perform the replacement, which renders the repair and maintenance work more trivial and inconvenient. Differences among the motor parameters of four types of compressors are shown in Table 1 below.

Table 1

| Serial Number | Items | Compressor A | Compressor B | Compressor C | Compressor D |
|---|---|---|---|---|---|
| 1 | Stator resistance R | 4500 | 6500 | 3700 | 7270 |
| 2 | Constant value $L_d$ of inductance of axis D | 77 | 164 | 96 | 45 |
| 3 | Constant value $L_d$ of inductance of axis Q | 110 | 200 | 196 | 83 |
| 4 | Permanent magnetic flux $\phi_m$ | 113 | 153 | 108 | 104 |

According to the technical solutions of the embodiments of the invention, after the start of the motor, the motor parameters will be automatically adjusted and estimated based on the sampled and collected motor information. The estimated motor parameters are more close to the actual motor parameters. Thus, even if the error of the initial motor parameters is comparatively large, after several adjustment periods, the estimated motor parameters will gradually approach the actual motor parameters, and the initial motor parameters will no longer produce an impact on the operation of the motor. Accordingly, even if the error of the initial motor parameters written in the parameter storage module is comparatively large, the motor will not be caused to operate inefficiently or even be damaged, and the motor still keeps comparatively high energy efficiency and comparatively low noise. That is to say, with respect to the motors of different models, the initial parameter values written into the air conditioning device can be the same. For example, the four different types of compressors shown in the above table may use the same initial motor parameters, e.g., using one set motor parameters of a stator resistance value between the maximum and the minimum of the stator resistance and a permanent magnetic flux between the maximum and the minimum of the permanent magnetic flux, i.e., the parameters of the compressor A, to serve as the initial motor parameters to be written into the parameter storage module. All the air conditioning devices in which these four different types of compressors are installed can use the same parameter storage module instead of different parameter storage module of different initial motor parameters. Therefore, it greatly facilitates the management of the air conditioning device and the repair of the air conditioning device.

Those skilled in the art can understand that all of or parts of the steps in the methods in the above embodiments can be achieved by instructing related hardware by a program, and the program can be stored in a computer readable storage medium, e.g., an ROM/RAM, a disk, an optical disc, etc.

The above contents are only preferred embodiments of the invention. It should be mentioned that those skilled in the art can make some improvements and modifications in case of not departing from the principle of the invention, and these improvements and modifications should also be considered to be within the scope of protection of the invention.

**Claims**

1.  An air conditioning device, comprising:

    a parameter storage module (102) storing initial motor parameters written in beforehand;
    a main control module (101) acquiring the initial motor parameters from the parameter storage module; and transmitting a motor operation instruction and the initial motor parameters during controlling the operation of the air conditioning device;
    a permanent magnet synchronous motor control means (103) controlling a permanent magnet synchronous motor to start operating based on the initial motor parameters transmitted by the main control module (101) after receiving the motor operation instruction transmitted by the main control module; and after the start of operation of the permanent magnet synchronous motor, estimating a rotor position angle error of the permanent magnet synchronous motor based on a sampled current and a sampled rotation speed of the permanent magnet synchronous motor; estimating current motor parameters of the permanent magnet synchronous motor based on the estimated rotor position angle error; and controlling the continuing operation of the permanent magnet synchronous motor based on the estimated current motor parameters,
    **characterized in that** the initial motor parameters include an initial motor stator resistance value $R_0$ and an initial motor magnetic flux value $\phi_m^0$; and
    the estimated current motor parameters include a current motor stator resistance estimated value $\hat{R}$ and a current motor magnetic flux estimated value $\hat{\phi}_m$,
    and wherein a rotor position angle error estimation unit (512) estimating the rotor position angle error of the permanent magnet synchronous motor based on the current and rotation speed sampled and collected by a motor information collection module (502) is specifically as follows:
    the rotor position angle error estimation unit (512) determining a vector current $i_{\gamma\delta}$ and a rotation angular speed $\omega$ of the permanent magnet synchronous motor based on the sampled and collected current and rotation speed of the permanent magnet synchronous motor; and estimating the rotor position angle error $\hat{\theta}_e$ of the permanent magnet synchronous motor based on $i_{\gamma\delta}$ and $\omega$.

2.  The device according to claim 1, **characterized in that** the permanent magnet synchronous motor control means comprises:

    the motor information collection module (502) sampling and collecting the current and rotation speed of the permanent magnet synchronous motor after the start of operation of the permanent magnet synchronous motor;
    a motor control module (501) controlling the permanent magnet synchronous motor to start operating based on the initial motor parameters after receiving the motor operation instruction; and after the start of operation of the permanent magnet synchronous motor, estimating the rotor position angle error of the permanent magnet synchronous motor based on the current and rotation speed of the permanent magnet synchronous motor sampled and collected by the motor information collection module;

estimating the current motor parameters of the permanent magnet synchronous motor based on the estimated rotor position angle error; and controlling the continuing operation of the permanent magnet synchronous motor based on the estimated current motor parameters.

3. The device according to claim 2, **characterized in that** the motor control module comprises:

a motor control unit (511) controlling the permanent magnet synchronous motor to start operating based on the initial motor parameters of the permanent magnet synchronous motor;

a rotor position angle error estimation unit (512) estimating the rotor position angle error of the permanent magnet synchronous motor based on the current and rotation speed sampled and collected by the motor information collection module; and

transmitting the estimated rotor position angle error;

a current motor parameter estimation unit (513) receiving the rotor position angle error estimated by the rotor position angle error estimation unit and estimating the current motor parameters of the permanent magnet synchronous motor based on the rotor position angle error estimated by the rotor position angle error estimation unit;

and transmitting the estimated current motor parameters to the motor control unit;

the motor control unit controlling the operation of the permanent magnet synchronous motor based on the estimated current motor parameters after receiving the current motor parameters estimated by the current motor parameter estimation unit.

4. The device according to claim 3, **characterized in that**
the rotor position angle error estimation unit is used for, each time a set period is reached, estimating the rotor position angle error of the permanent magnet synchronous motor based on the current and rotation speed sampled and collected by the motor information collection module; and transmitting the estimated rotor position angle error.

5. The device according to claim 1, **characterized in that** the current motor parameter estimation unit estimating the current motor parameters of the permanent magnet synchronous motor based on the rotor position angle error estimated by the rotor position angle error estimation unit is specifically as follows:
the current motor parameter estimation unit judging the value of $\hat{\theta}_e$ :

if $\hat{\theta}_e$ is less than a set lower limit, $R_{i+1} = R_i + \Delta R$, and $\phi_m^{i+1} = \phi_m^i + \Delta \phi_m$ ;

if $\hat{\theta}_e$ is less than or equal to a set upper limit, and is larger than or equal to the set lower limit, $R_{i+1} = R_i$, and $\phi_m^{i+1} = \phi_m^i$ ;

the current motor parameter estimation unit using $R_{i+1}$ as the current motor stator resistance estimated value $\hat{R}$, and using $\phi_m^{i+1}$ as the current motor magnetic flux estimated value $\hat{\phi}_m$,

wherein $R_{i+1}$ is the motor stator resistance value estimated at the $(i+1)^{th}$ time, $\phi_m^{i+1}$ is the motor magnetic flux value estimated at the $(i+1)^{th}$ time, $R_i$ is the motor stator resistance value estimated at the $i^{th}$ time, $\phi_m^i$ is the motor magnetic flux value estimated at the $i^{th}$ time, $\Delta R$ is a resistance adjusted value set beforehand, and $\Delta \phi_m$ is a magnetic flux adjusted value set beforehand.

6. A method for controlling a permanent magnet synchronous motor, comprising:

estimating a rotor position angle error of the permanent magnet synchronous motor based on a sampled and collected current and rotation speed of the permanent magnet synchronous motor after the start of operation of the permanent magnet synchronous motor (S202);

estimating current motor parameters of the permanent magnet synchronous motor based on the estimated rotor position angle error (S203);

controlling the operation of the permanent magnet synchronous motor based on the estimated current motor parameters (S204),

**characterized in that** before the operation of the permanent magnet synchronous motor,
the method further comprises:

acquiring initial motor parameters of the permanent magnet synchronous motor, and
controlling the permanent magnet synchronous motor to start operating using the initial motor parameters
(S201), wherein
the initial motor parameters include an initial motor stator resistance value $R_0$ and an initial motor magnetic
flux value $\phi_m^0$; and
the estimated current motor parameters include a current motor stator resistance estimated value $\hat{R}$ and a
current motor magnetic flux estimated value $\hat{\phi}_m$ and
the estimating a rotor position angle error of the permanent magnet synchronous motor based on a sampled

and collected current and rotation speed of the permanent magnet synchronous motor comprises:

determining a vector current $i_{\gamma\delta}$ and a rotation angular speed $\omega$ of the permanent magnet synchronous
motor based on the sampled and collected current and rotation speed of the permanent magnet synchronous
motor;
estimating the rotor position angle error $\hat{\theta}_e$ of the permanent magnet synchronous motor based on the
vector current $i_{\gamma\delta}$ and the rotation angular speed $\omega$.

**7.** The method according to claim 6, **characterized in that** the estimating the rotor position angle error $\hat{\theta}_e$ of the
permanent magnet synchronous motor based on the vector current $i_{\gamma\delta}$ and the rotation angular speed $\omega$ includes:
determining $\hat{\theta}_e$ based on the following Formula 1:

$$\hat{\theta}_e \approx -p\left\{\frac{(R_i - R_0)i_\gamma - (\phi_m^i - \phi_m^0) + \omega\phi_m^0}{\phi_m^0}\right\} \Big/ (K_{p\theta} + \frac{K_{I\theta}}{p}) \qquad \text{(Formula 1)}$$

wherein in the Formula 1, $i$ is the times of estimation; $R_i$ is the motor stator resistance value estimated at the
$i^{th}$ time, when $i=0$, $R_i$ is the initial motor stator resistance value $R_0$; $\phi_m^i$ is the motor magnetic flux value estimated
at the $i^{th}$ time, when $i=0$, $\phi_m^i$ is the initial motor stator magnetic flux value $\phi_m^0$ $i_\gamma$ is a real current component of
$i_{\gamma\delta}$; $p$ is a differential factor; $K_{p\theta}$ and $K_{I\theta}$ are set parameters; and
the estimating current motor parameters of the permanent magnet synchronous motor based on the estimated
rotor position angle error includes:

if $\hat{\theta}_e$ is larger than a set upper limit, the motor stator resistance value estimated at the $(i+1)^{th}$ time $R_{i+1} = R_i$
- $\Delta R$, and the motor magnetic flux value estimated at the $(i+1)^{th}$ time $\phi_m^{i+1} = \phi_m^i - \Delta\phi_m$; wherein $\Delta R$ is a
resistance adjusted value set beforehand, and
$\Delta\phi_m$ is a magnetic flux adjusted value set beforehand;
if $\hat{\theta}_e$ is less than a set lower limit, $R_{i+1} = R_i + \Delta R$, and $\phi_m^{i+1} = \phi_m^i + \Delta\phi_m$;
if $\hat{\theta}_e$ is less than or equal to the set upper limit, and is larger than or equal to the set lower limit, $R_{i+1} = R_i$,
and $\phi_m^{i+1} = \phi_m^i$;

using $R_{i+1}$ as the current motor stator resistance estimated value $\hat{R}$, and using $\phi_m^{i+1}$ as the current motor
magnetic flux estimated value $\hat{\phi}_m$.

**8.** The method according to claim 7, **characterized in that** the $\Delta R$ is set based on the following Formula 2:

$$\Delta R = dR \times T_s \qquad\qquad \text{(Formula 2)}$$

the $\Delta\phi_m$ is set based on the following Formula 3:

$$\Delta\phi_m = d\phi_m \times T_s \qquad \text{(Formula 3)}$$

wherein $T_s$ is the set period, and $dR$ and $d\phi_m$ are set parameters.

9. The method according to any one of claims 6-8, **characterized in that** the estimating a rotor position angle error of the permanent magnet synchronous motor based on a sampled and collected current and rotation speed of the permanent magnet synchronous motor; and estimating current motor parameters of the permanent magnet synchronous motor based on the estimated rotor position angle error are specifically as follows:
estimating the rotor position angle error of the permanent magnet synchronous motor based on the sampled and collected current and rotation speed of the permanent magnet synchronous motor, and estimating the current motor parameters of the permanent magnet synchronous motor based on the estimated rotor position angle error each time the set period is reached.


**Patentansprüche**

1. Klimatisierungsvorrichtung, umfassend:

ein Parameterspeichermodul (102), das zuvor hineingeschriebene Anfangsmotorparameter speichert;
ein Hauptsteuermodul (101), das die Anfangsmotorparameter von dem Parameterspeichermodul erhält; und während eines Steuerns des Betriebs der Klimatisierungsvorrichtung eine Motorbetriebsanweisung und die Anfangsmotorparameter überträgt;
eine Permanentmagnet-Synchronmotor-Steuereinrichtung (103), die basierend auf den durch das Hauptsteuermodul (101) übertragenen Anfangsmotorparametern nach Empfangen der durch das Hauptsteuermodul übertragenen Motorbetriebsanweisung einen Permanentmagnet-Synchronmotor dazu steuert, den Betrieb zu starten; und nach dem Betriebsstart des Permanentmagnet-Synchronmotors einen Rotorpositionswinkelfehler des Permanentmagnet-Synchronmotors basierend auf einem abgetasteten Strom und einer abgetasteten Rotationsgeschwindigkeit des Permanentmagnet-Synchronmotors schätzt; gegenwärtige Motorparameter des Permanentmagnet-Synchronmotors basierend auf dem geschätzten Rotorpositionswinkelfehler schätzt; und den fortlaufenden Betrieb des Permanentmagnet-Synchronmotors basierend auf den geschätzten gegenwärtigen Motorparametern steuert,
**dadurch gekennzeichnet, dass** die Anfangsmotorparameter einen Anfangsmotorstatorwiderstandswert $R_0$ und einen Anfangsmotormagnetflusswert $\phi^0_m$ umfassen; und die geschätzten gegenwärtigen Motorparameter einen geschätzten gegenwärtigen Motorstatorwiderstandswert $\hat{R}$ und einen geschätzten gegenwärtigen Motormagnetflusswert $\hat{\phi}_m$ umfassen,
und wobei eine Rotorpositionswinkelfehlerschätzeinheit (512), die basierend auf dem Strom und der Rotationsgeschwindigkeit, die durch ein Motorinformationssammelmodul (502) abgetastet und gesammelt wurden, den Rotorpositionswinkelfehler des Permanentmagnet-Synchronmotors schätzt, im Speziellen ist wie folgt:
die Rotorpositionswinkelfehlerschätzeinheit (512), die basierend auf dem Strom und der Rotationsgeschwindigkeit des Permanentmagnet-Synchronmotors, die abgetastet und gesammelt wurden, einen Vektorstrom $i_{\gamma\delta}$ und eine Rotationswinkelgeschwindigkeit $\omega$ des Permanentmagnet-Synchronmotors bestimmt, und den Rotorpositionswinkelfehler $\hat{\theta}_e$ des Permanentmagnet-Synchronmotors basierend auf $i_{\gamma\delta}$ und $\omega$ schätzt.

2. Vorrichtung nach Anspruch 1, **dadurch gekennzeichnet, dass** die Permanentmagnet-Synchronmotor-Steuereinrichtung umfasst:

das Motorinformationssammelmodul (502), das nach dem Betriebsstart des Permanentmagnet-Synchronmotors den Strom und die Rotationsgeschwindigkeit des Permanentmagnet-Synchronmotors abtastet und sammelt;
ein Motorsteuermodul (501), das basierend auf den Anfangsmotorparametern nach Empfangen der Motorbetriebsanweisung den Permanentmagnet-Synchronmotor dazu steuert, den Betrieb zu starten; und nach dem Betriebsstart des Permanentmagnet-Synchronmotors basierend auf dem Strom und der Rotationsgeschwindigkeit des Permanentmagnet-Synchronmotors, die durch das Motorinformationssammelmodul abgetastet und gesammelt wurden, den Rotorpositionswinkelfehler des Permanentmagnet-Synchronmotors schätzt; basierend auf dem geschätzten Rotorpositionswinkelfehler die gegenwärtigen Motorparameter des Permanentmagnet-Synchronmotors schätzt; und basierend auf den geschätzten gegenwärtigen Motorparametern den fortlaufenden Betrieb des Permanentmagnet-Synchronmotors steuert.

3. Vorrichtung nach Anspruch 2, **dadurch gekennzeichnet, dass** das Motorsteuermodul umfasst:

eine Motorsteuereinheit (511), die basierend auf den Anfangsmotorparametern des Permanentmagnet-Synchronmotors den Permanentmagnet-Synchronmotor dazu steuert, den Betrieb zu starten;
eine Rotorpositionswinkelfehlerschätzeinheit (512), die basierend auf dem Strom und der Rotationsgeschwindigkeit, die durch das Motorinformationssammelmodul abgetastet und gesammelt wurden, den Rotorpositionswinkelfehler des Permanentmagnet-Synchronmotors schätzt; und den geschätzten Rotorpositionswinkelfehler überträgt;
eine Einheit zum Schätzen gegenwärtiger Motorparameter (513), die den durch die Rotorpositionswinkelfehlerschätzeinheit geschätzten Rotorpositionswinkelfehler empfängt und basierend auf dem durch die Rotorpositionswinkelfehlerschätzeinheit geschätzten Rotorpositionswinkelfehler die gegenwärtigen Motorparameter des Permanentmagnet-Synchronmotors schätzt; und die geschätzten gegenwärtigen Motorparameter zu der Motorsteuereinheit überträgt;
wobei die Motorsteuereinheit nach Empfangen der durch die Einheit zum Schätzen gegenwärtiger Motorparameter geschätzten gegenwärtigen Motorparameter basierend auf den geschätzten gegenwärtigen Motorparametern den Betrieb des Permanentmagnet-Synchronmotors steuert.

4. Vorrichtung nach Anspruch 3, **dadurch gekennzeichnet, dass**
die Rotorpositionswinkelfehlerschätzeinheit jedesmal, wenn ein eingestellter Zeitraum erreicht ist, zum Schätzen des Rotorpositionswinkelfehlers des Permanentmagnet-Synchronmotors basierend auf dem Strom und der Rotationsgeschwindigkeit, die durch das Motorinformationssammelmodul abgetastet und gesammelt wurden, und zum Übertragen des geschätzten Rotorpositionswinkelfehlers verwendet wird.

5. Vorrichtung nach Anspruch 1, **dadurch gekennzeichnet, dass** eine Einheit zum Schätzen gegenwärtiger Motorparameter, die basierend auf dem durch die Rotorpositionswinkelfehlerschätzeinheit geschätzten Rotorpositionswinkelfehler die gegenwärtigen Motorparameter des Permanentmagnet-Synchronmotors schätzt, im Speziellen ist wie folgt:
die Einheit zum Schätzen gegenwärtiger Motorparameter, die den Wert von $\hat{\theta}_e$ beurteilt:

falls $\hat{\theta}_e$ geringer als ein eingestellter unterer Grenzwert ist, $R_{i+1} = R_i + \Delta R$, und $\phi_m^{i+1} = \phi_m^i + \Delta\phi_m$;
falls $\hat{\theta}_e$ geringer als ein oder gleich einem eingestellten oberen Grenzwert ist, und größer als der oder gleich dem eingestellten unteren Grenzwert ist, $R_{i+1} = R_i$, und $\phi_m^{i+1} = \phi_m^i$ ;
die Einheit zum Schätzen gegenwärtiger Motorparameter, die $R_{i+1}$ als den geschätzten gegenwärtigen Motorstatorwiderstandswert $\hat{R}$ verwendet, und $\phi_m^{i+1}$ als den geschätzten gegenwärtigen Motormagnetflusswert $\hat{\phi}_m$ verwendet,
wobei $R_{i+1}$ der Motorstatorwiderstandswert ist, der bei dem (i+1)-ten Mal geschätzt wurde, $\phi_m^{i+1}$ der Motormagnetflusswert ist, der bei dem (i+1)-ten Mal geschätzt wurde, $R_i$ der Motorstatorwiderstandswert ist, der bei dem i-ten Mal geschätzt wurde, $\phi_m^i$ der Motormagnetflusswert ist, der bei dem i-ten Mal geschätzt wurde, $\Delta R$ ein zuvor eingestellter angepasster Widerstandswert ist, und $\Delta\phi_m$ ein zuvor eingestellter angepasster Magnetflusswert ist.

6. Verfahren zum Steuern eines Permanentmagnet-Synchronmotors, umfassend:

Schätzen eines Rotorpositionswinkelfehlers des Permanentmagnet-Synchronmotors basierend auf einem Strom und einer Rotationsgeschwindigkeit des Permanentmagnet-Synchronmotors, die abgetastet und gesammelt wurden, nach dem Betriebsstart des Permanentmagnet-Synchronmotors (S202);
Schätzen gegenwärtiger Motorparameter des Permanentmagnet-Synchronmotors basierend auf dem geschätzten Rotorpositionswinkelfehler (S203);
Steuern des Betriebs des Permanentmagnet-Synchronmotors basierend auf den geschätzten gegenwärtigen Motorparametern (S204),
**dadurch gekennzeichnet, dass** vor dem Betrieb des Permanentmagnet-Synchronmotors das Verfahren ferner umfasst:

Erhalten von Anfangsmotorparametern des Permanentmagnet-Synchronmotors, und unter Verwendung der Anfangsmotorparameter Steuern des Permanentmagnet-Synchronmotors dazu, den Betrieb zu starten (S201), wobei

die Anfangsmotorparameter einen Anfangsmotorstatorwiderstandswert $R_0$ und einen Anfangsmotormagnetflusswert $\phi^0_m$ umfassen; und

die geschätzten gegenwärtigen Motorparameter einen geschätzten gegenwärtigen Motorstatorwiderstandswert $\hat{R}$ und einen geschätzten gegenwärtigen Motormagnetflusswert $\hat{\phi}_m$ umfassen, und

das Schätzen eines Rotorpositionswinkelfehlers des Permanentmagnet-Synchronmotors basierend auf einem Strom und einer Rotationsgeschwindigkeit des Permanentmagnet-Synchronmotors, die abgetastet und gesammelt wurden, umfasst:

Bestimmen eines Vektorstroms $i_{\gamma\delta}$ und einer Rotationswinkelgeschwindigkeit $\omega$ des Permanentmagnet-Synchronmotors basierend auf dem Strom und der Rotationsgeschwindigkeit des Permanentmagnet-Synchronmotors, die abgetastet und gesammelt wurden;
Schätzen des Rotorpositionswinkelfehlers $\hat{\theta}_e$ des Permanentmagnet-Synchronmotors basierend auf dem Vektorstrom $i_{\gamma\delta}$ und der Rotationswinkelgeschwindigkeit $\omega$.

7. Verfahren nach Anspruch 6, **dadurch gekennzeichnet, dass** das Schätzen des Rotorpositionswinkelfehlers $\hat{\theta}_e$ des Permanentmagnet-Synchronmotors basierend auf dem Vektorstrom $i_{\gamma\delta}$ und der Rotationswinkelgeschwindigkeit $\omega$ umfasst:
Bestimmen von $\hat{\theta}_e$ basierend auf der folgenden Formel 1:

$$\hat{\theta}_e \approx -p\left\{\frac{(R_i - R_0)i_\gamma - (\phi^i_m - \phi^0_m) + \omega\phi^0_m}{\phi^0_m}\right\}\bigg/\left(K_{p\theta} + \frac{K_{I\theta}}{p}\right) \qquad \text{(Formel 1)}$$

wobei in der Formel 1 $i$ die Male der Schätzung sind; $R_i$ der Motorstatorwiderstandswert ist, der beim i-ten Mal geschätzt wurde, wenn $i=0$, $R_i$ der Anfangsmotorstatorwiderstandswert $R_0$ ist; $\phi^i_m$ der Motormagnetflusswert ist, der beim i-ten Mal geschätzt wurde, wenn $i=0$, $\phi^i_m$ der Anfangsmotorstatormagnetflusswert $\phi^0_m$ ist; $i_\gamma$ eine reale Stromkomponente von $i_{\gamma\delta}$ ist; $p$ ein Differentialfaktor ist; $K_{p\theta}$ und $K_{I\theta}$ eingestellte Parameter sind; und

das Schätzen gegenwärtiger Motorparameter des Permanentmagnet-Synchronmotors basierend auf dem geschätzten Rotorpositionswinkelfehler umfasst:

falls $\hat{\theta}_e$ größer als ein eingestellter oberer Grenzwert ist, ist der Motorstatorwiderstandswert, der bei dem (i+1)-ten Mal geschätzt wurde, $R_{i+1} = R_i - \Delta R$, und ist der Motormagnetflusswert, der bei dem (i+1)-ten Mal geschätzt wurde, $\phi^{i+1}_m = \phi^i_m - \Delta\phi_m$; wobei $\Delta R$ ein zuvor eingestellter angepasster Widerstandswert ist, und $\Delta\phi_m$ ein zuvor eingestellter angepasster Magnetflusswert ist;

falls $\hat{\theta}_e$ geringer als ein eingestellter unterer Grenzwert ist, $R_{i+1} = R_i + \Delta R$, und $\phi^{i+1}_m = \phi^i_m + \Delta\phi_m$;

falls $\hat{\theta}_e$ geringer als der oder gleich dem eingestellten oberen Grenzwert ist, und größer als der oder gleich dem eingestellten unteren Grenzwert ist, $R_{i+1} = R_i$, und $\phi^{i+1}_m = \phi^i_m$;

Verwenden von $R_{i+1}$ als den geschätzten gegenwärtigen Motorstatorwiderstandswert $\hat{R}$, und Verwenden von $\phi^{i+1}_m$ als den geschätzten gegenwärtigen Motormagnetflusswert $\hat{\phi}_m$.

8. Verfahren nach Anspruch 7, **dadurch gekennzeichnet, dass** das $\Delta R$ basierend auf der folgenden Formel 2 eingestellt wird:

$$\Delta R = dR \times T_s \qquad \text{(Formel 2)}$$

das $\Delta\varphi_m$ basierend auf der folgenden Formel 3 eingestellt wird:

$$\Delta\phi = d\phi_m \times T_s$$

(Formel 3)

wobei $T_s$ der eingestellte Zeitraum ist, und $dR$ und $d\phi_m$ eingestellte Parameter sind.

9. Verfahren nach einem der Ansprüche 6-8, **dadurch gekennzeichnet, dass** das Schätzen eines Rotorpositionswinkelfehlers des Permanentmagnet-Synchronmotors basierend auf einem Strom und einer Rotationsgeschwindigkeit des Permanentmagnet-Synchronmotors, die abgetastet und gesammelt wurden; und ein Schätzen gegenwärtiger Motorparameter des Permanentmagnet-Synchronmotors basierend auf dem geschätzten Rotorpositionswinkelfehler im Speziellen sind wie folgt:
Schätzen des Rotorpositionswinkelfehlers des Permanentmagnet-Synchronmotors basierend auf dem Strom und der Rotationsgeschwindigkeit des Permanentmagnet-Synchronmotors, die abgetastet und gesammelt wurden, und Schätzen der gegenwärtigen Motorparameter des Permanentmagnet-Synchronmotors basierend auf dem geschätzten Rotorpositionswinkelfehler jedes Mal, wenn der eingestellte Zeitraum erreicht ist.

**Revendications**

1. Dispositif de climatisation, comportant :

- un module de stockage de paramètres (102) stockant des paramètres de moteur initiaux écrits au préalable,
- un module de régulation principal (101) acquérant les paramètres de moteur initiaux à partir du module de stockage de paramètres, et transmettant une instruction de fonctionnement de moteur et les paramètres de moteur initiaux pendant la régulation du fonctionnement du dispositif de climatisation,
- un moyen de régulation de moteur synchrone à aimant permanent (103) régulant un moteur synchrone à aimant permanent pour démarrer le fonctionnement sur la base des paramètres de moteur initiaux transmis par le module de régulation principal (101) après la réception de l'instruction de fonctionnement de moteur transmise par le module de régulation principal, et après le démarrage du fonctionnement du moteur synchrone à aimant permanent, estimant une erreur d'angle de position de rotor du moteur synchrone à aimant permanent sur la base d'un courant échantillonné et d'une vitesse de rotation échantillonnée du moteur synchrone à aimant permanent, estimant des paramètres de moteur actuels du moteur synchrone à aimant permanent sur la base de l'erreur d'angle de position de rotor estimée, et régulant le fonctionnement continu du moteur synchrone à aimant permanent sur la base des paramètres de moteur actuels estimés,

**caractérisé en ce que** les paramètres de moteur initiaux comprennent une valeur de résistance de stator de moteur initiale $R_0$ et une valeur de flux magnétique de moteur initiale $\phi^0{}_m$, et les paramètres de moteur actuels estimés comprennent une valeur estimée de résistance de stator de moteur actuelle $\hat{R}$ et une valeur estimée de flux magnétique de moteur actuelle $\hat{\phi}m$,
et **en ce qu'**une unité d'estimation d'erreur d'angle de position de rotor (512) estimant l'erreur d'angle de position de rotor du moteur synchrone à aimant permanent sur la base du courant et de la vitesse de rotation échantillonnés et collectés par un module de collecte d'informations de moteur (502) est spécifiquement comme suit :
l'unité d'estimation d'erreur d'angle de position de rotor (512) déterminant un courant vecteur $i_{\gamma\delta}$ et une vitesse angulaire de rotation $\omega$ du moteur synchrone à aimant permanent sur la base du courant et de la vitesse de rotation échantillonnés et collectés du moteur synchrone à aimant permanent, et estimant l'erreur d'angle de position de rotor $\hat{\theta}e$ du moteur synchrone à aimant permanent sur la base de $i_{\gamma\delta}$ et $\omega$.

2. Dispositif selon la revendication 1, **caractérisé en ce que** le moyen de régulation de moteur synchrone à aimant permanent comporte :

- le module de collecte d'informations de moteur (502) échantillonnant et collectant le courant et la vitesse de rotation du moteur synchrone à aimant permanent après le démarrage du fonctionnement du moteur synchrone à aimant permanent,
- un module de régulation de moteur (501) régulant le moteur synchrone à aimant permanent pour démarrer le fonctionnement sur la base des paramètres de moteur initiaux après la réception de l'instruction de fonctionnement de moteur, et après le démarrage du fonctionnement du moteur synchrone à aimant permanent, estimant l'erreur d'angle de position de rotor du moteur synchrone à aimant permanent sur la base du courant et de la vitesse de rotation du moteur synchrone à aimant permanent échantillonnés et collectés par le module de collecte d'informations de moteur, estimant les paramètres de moteur actuels du moteur synchrone à aimant permanent sur la base de l'erreur d'angle de position de rotor estimée, et régulant le fonctionnement continu du moteur synchrone à aimant permanent sur la base des paramètres de moteur actuels estimés.

3. Dispositif selon la revendication 2, **caractérisé en ce que** le module de régulation de moteur comporte :

- une unité de régulation de moteur (511) régulant le moteur synchrone à aimant permanent pour démarrer le fonctionnement sur la base des paramètres de moteur initiaux du moteur synchrone à aimant permanent,
- une unité d'estimation d'erreur d'angle de position de rotor (512) estimant l'erreur d'angle de position de rotor du moteur synchrone à aimant permanent sur la base du courant et de la vitesse de rotation échantillonnés et collectés par le module de collecte d'informations de moteur, et transmettant l'erreur d'angle de position de rotor estimée,
- une unité d'estimation de paramètres de moteur actuels (513) recevant l'erreur d'angle de position de rotor estimée par l'unité d'estimation d'erreur d'angle de position de rotor et estimant les paramètres de moteur actuels du moteur synchrone à aimant permanent sur la base de l'erreur d'angle de position de rotor estimée par l'unité d'estimation d'erreur d'angle de position de rotor, et transmettant les paramètres de moteur actuels estimés à l'unité de régulation de moteur,
- l'unité de régulation de moteur régulant le fonctionnement du moteur synchrone à aimant permanent sur la base des paramètres de moteur actuels estimés après la réception des paramètres de moteur actuels estimés par l'unité d'estimation de paramètres de moteur actuels.

4. Dispositif selon la revendication 3, **caractérisé en ce que**

- l'unité d'estimation d'erreur d'angle de position de rotor est utilisée pour, à chaque fois qu'une période définie est atteinte, estimant l'erreur d'angle de position de rotor du moteur synchrone à aimant permanent sur la base du courant et de la vitesse de rotation échantillonnés et collectés par le module de collecte d'informations de moteur, et transmettant l'erreur d'angle de position de rotor estimée.

5. Dispositif selon la revendication 1, **caractérisé en ce que** l'unité d'estimation de paramètres de moteur actuels estimant les paramètres de moteur actuels du moteur synchrone à aimant permanent sur la base de l'erreur d'angle de position de rotor estimée par l'unité d'estimation d'erreur d'angle de position de rotor est spécifiquement comme suit :

l'unité d'estimation de paramètres de moteur actuels jugeant la valeur de $\hat{\theta}e$ :

si $\hat{\theta}e$ est inférieur à une limite inférieure définie, $R_{i+1} = R_i + \Delta R$, et $\phi_m^{i+1} = \phi_m^i + \Delta\phi_m$,

si $\hat{\theta}e$ est inférieur ou égal à une limite supérieure définie, et est supérieur ou égal à la limite inférieure définie,

$R_{i+1} = R_i$, et $\phi_m^{i+1} = \phi_m^i$,

l'unité d'estimation de paramètres de moteur actuels utilisant $R_{i+1}$ comme la valeur estimée de résistance de stator de moteur actuelle $\hat{R}$, et utilisant $\phi_m^{i+1}$ comme la valeur estimée de flux magnétique de moteur actuelle $\hat{\phi}m$, où $R_{i+1}$ représente la valeur de résistance de stator de moteur estimée au $(i + 1)$ème temps, $\phi_m^{i+1}$ représente la valeur de flux magnétique de moteur estimée au $(i + 1)$ème temps, $R_i$ représente la valeur de résistance de stator de moteur estimée au $i$ème temps, $\phi_m^i$ représente la valeur de flux magnétique de moteur estimée au $i$ème temps, $\Delta R$ représente une valeur ajustée de résistance définie au préalable, et $\Delta\phi_m$ représente une valeur ajustée de flux magnétique définie au préalable.

6. Procédé destiné à réguler un moteur synchrone à aimant permanent, consistant à :

- estimer une erreur d'angle de position de rotor du moteur synchrone à aimant permanent sur la base d'un courant et d'une vitesse de rotation échantillonnés et collectés du moteur synchrone à aimant permanent après le démarrage du fonctionnement du moteur synchrone à aimant permanent (S202),
- estimer des paramètres de moteur actuels du moteur synchrone à aimant permanent sur la base de l'erreur d'angle de position de rotor estimée (S203),
- réguler le fonctionnement du moteur synchrone à aimant permanent sur la base des paramètres de moteur actuels estimés (S204),

**caractérisé en ce que**, avant le fonctionnement du moteur synchrone à aimant permanent, le procédé consiste en outre à :

acquérir des paramètres de moteur initiaux du moteur synchrone à aimant permanent, et réguler le moteur synchrone à aimant permanent pour démarrer le fonctionnement en utilisant des paramètres de moteur initiaux (S201), où

les paramètres de moteur initiaux comprennent une valeur de résistance de stator de moteur initiale $R_0$ et une valeur initiale de flux magnétique de moteur $\phi_m^0$, et

les paramètres de moteur actuels estimés comprennent une valeur actuelle $\hat{R}$ estimée de résistance de stator de moteur et une valeur actuelle $\hat{\phi}m$ estimée de flux magnétique de moteur et

l'estimation d'une erreur d'angle de position de rotor du moteur synchrone à aimant permanent sur la base d'un courant et d'une vitesse de rotation échantillonnés et collectés du moteur synchrone à aimant permanent consiste à :

- déterminer un courant vecteur $i_{\gamma\delta}$ et une vitesse angulaire de rotation $\omega$ du moteur synchrone à aimant permanent sur la base du courant et de la vitesse de rotation échantillonnés et collectés du moteur synchrone à aimant permanent,
- estimer l'erreur d'angle de position de rotor $\hat{\theta}e$ du moteur synchrone à aimant permanent sur la base du courant vecteur $i_{\gamma\delta}$ et de la vitesse angulaire de rotation $\omega$.

7. Procédé selon la revendication 6, **caractérisé en ce que** l'estimation de l'erreur d'angle de position de rotor $\hat{\theta}e$ du moteur synchrone à aimant permanent sur la base du courant vecteur $i_{\gamma\delta}$ et de la vitesse angulaire de rotation $\omega$ comprend :
- la détermination de $\hat{\theta}e$ sur la base de la formule 1 suivante :

$$\hat{\theta}_e \approx -p\left\{\frac{(R_i - R_0)i_\gamma - (\phi_m^i - \phi_m^0) + \omega\phi_m^0}{\phi_m^0}\right\}\Big/\left(K_{p\theta} + \frac{K_{I\theta}}{p}\right) \qquad \text{(Formule 1)}$$

où, dans la formule 1, $i$ représente les temps d'estimation, $R_i$ représente la valeur de résistance de stator de moteur estimée au $i$ ème temps, lorsque $i=0$, $R_i$ représente la valeur de résistance de stator de moteur initiale $R_0$, $\phi_m^i$ représente la valeur de flux magnétique de moteur estimée au $i$ ème temps, lorsque $i=0$, $\phi_m^i$ représente la valeur de flux magnétique de stator de moteur initiale $\phi_m^0$, $i_\gamma$ représente une composante de courant réelle de $i_{\gamma\delta}$, $p$ représente un facteur différentiel, $K_{p\theta}$ et $K_{I\theta}$ représentent des paramètres définis, et

l'estimation des paramètres de moteur actuels du moteur synchrone à aimant permanent sur la base de l'erreur d'angle de position de rotor estimée comprend :

si $\hat{\theta}e$ est supérieur à une limite supérieure définie, la valeur de résistance de stator de moteur estimée au $(i + 1)$ème temps $R_{i+1} = R_i - \Delta R_1$, et la valeur de flux magnétique de moteur estimée au $(i + 1)$ème temps $\phi_m^{i+1} = \phi_m^i - \Delta\phi_m$, $\Delta R$ représente une valeur ajustée de résistance définie au préalable, et $\Delta\phi_m$ représente une valeur ajustée de flux magnétique définie au préalable,

si $\hat{\theta}e$ est inférieur à une limite inférieure définie, $R_{i+1} = R_i + \Delta R$, $\phi_m^{i+1} = \phi_m^i + \Delta\phi_m$,

si $\hat{\theta}e$ est inférieur ou égal à la limite supérieure définie, et est supérieur ou égal à la limite inférieure définie, $R_{i+1} = R_i$, et $\phi_m^{i+1} = \phi_m^i$,

en utilisant $R_{i+1}$ comme la valeur estimée de résistance de stator de moteur actuelle $\hat{R}$, et en utilisant $\phi_m^{i+1}$ comme la valeur estimée de flux magnétique de moteur actuelle $\hat{\phi}m$.

8. Procédé selon la revendication 7, **caractérisé en ce que** $\Delta R$ est définie sur la base de la formule 2 suivante :

$$\Delta R = dR \times T_s \qquad \text{(Formule 2)}$$

$\Delta \phi_m$ est défini sur la base de la formule 3 suivante :

$$\Delta \phi = d\phi_m \times T_s \qquad \text{(Formule 3)}$$

où $T_s$ représente la période définie, et $dR$ et $d\phi_m$ représentent des paramètres définis.

9. Procédé selon une quelconque des revendications 6 à 8, **caractérisé en ce que** l'estimation d'une erreur d'angle de position de rotor du moteur synchrone à aimant permanent sur la base d'un courant et d'une vitesse de rotation échantillonnés et collectés du moteur synchrone à aimant permanent, et l'estimation des paramètres de moteur actuels du moteur synchrone à aimant permanent sur la base de l'erreur d'angle de position de rotor estimée sont spécifiquement comme suit :

- l'estimation de l'erreur d'angle de position de rotor du moteur synchrone à aimant permanent sur la base du courant et de la vitesse de rotation échantillonnés et collectés du moteur synchrone à aimant permanent, et l'estimation des paramètres de moteur actuels du moteur synchrone à aimant permanent sur la base de l'erreur d'angle de position de rotor estimée à chaque fois que la période définie est atteinte.

```
                    ┌─────────────┐  ┌─ 102
                    │  Parameter  │  │
                    │   storage   │ ─┘
                    │   module    │
                    └──────┬──────┘
                           │
                           │                          ┌─ 103
                           │                          │
┌──────────────┐  ┌─ 101   │      ┌────────────────────┐─┘
│ Main control │  │        │      │ Permanent magnet   │
│   module     │ ─┴────────┴──────│ synchronous motor  │
│              │                  │ control means      │
└──────────────┘                  └────────────────────┘
```

**FIG. 1**

```
┌──────────────────────────────────────────────────────┐  ┌─ S201
│ Controlling the operation of the permanent magnet     │  │
│ synchronous motor based on the initial motor          │ ─┘
│ parameters                                            │
└──────────────────────────────────────────────────────┘
                          │
                          ▼
┌──────────────────────────────────────────────────────┐  ┌─ S202
│ Estimating the rotor position angle error of the      │  │
│ permanent magnet synchronous motor based on the       │ ─┘
│ sampled and collected current and rotation speed of   │
│ the permanent magnet synchronous motor after the      │
│ start of operation of the permanent magnet synchronous│
│ motor                                                 │
└──────────────────────────────────────────────────────┘
                          │
                          ▼
┌──────────────────────────────────────────────────────┐  ┌─ S203
│ Estimating the current motor parameters of the        │  │
│ permanent magnet synchronous motor based on the       │ ─┘
│ estimated rotor position angle error                  │
└──────────────────────────────────────────────────────┘
                          │
                          ▼
┌──────────────────────────────────────────────────────┐  ┌─ S204
│ Controlling the operation of the permanent magnet     │  │
│ synchronous motor based on the estimated current      │ ─┘
│ motor parameters                                      │
└──────────────────────────────────────────────────────┘
```

**FIG. 2**

Start

Controlling the operation of the permanent magnet synchronous motor based on the initial motor parameters, the times of estimation $i$=0 ⟋ S301

Estimating the rotor position angle error of the permanent magnet synchronous motor based on the sampled and collected current and rotation speed of the permanent magnet synchronous motor when the set period is reached ⟋ S302

Estimating the current motor parameters of the permanent magnet synchronous motor based on the estimated rotor position angle error ⟋ S303

Controlling the operation of the permanent magnet synchronous motor based on the estimated current motor parameters, adding the times of estimation by 1, i.e., $i$=$i$+1 ⟋ S304

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007085508 A